# EUROPÄISCHE PATENTANMELDUNG

(11) **EP 0 887 258 A2**
(43) Veröffentlichungstag der Anmeldung: **30.12.1998**
(21) Anmeldenummer: 98111668.4
(22) Anmeldetag: 25.06.1998
(51) Int. Cl.: B64D 17/34

(54) **Gleitschirm**

(30) Priorität: 28.06.1997 DE 29711311 U
(71) Anmelder: Zwanzger, Peter, 45721 Haltern (DE)
(72) Erfinder: Zwanzger, Peter, 45721 Haltern (DE)
(74) Vertreter: Patentanwälte Meinke, Dabringhaus und Partner

(57) **Zusammenfassung**

Bei einem Gleitschirm, insbesondere einem Gleitschirm mit einer Mehrzahl von zwischen einem Ober- und Untersegel gebildeten Zellen, mit außenrandseitigen Stabilisatoren und mit einer Vielzahl von Fang- und Steuerleinen, soll bei Erhöhung der Wendigkeit eines derartigen Gleitschirmes bzw. -segels das Kurvensinken minimiert werden.

Dies wird dadurch erreicht, daß die Hinterkanten (5) der vertikalen Flügelenden (Stabilos) (4) mit einer Zusatzsteuerleine (10) zur Ausübung einer Bewegung nach innen ausgerüstet sind.

## Beschreibung

Die Erfindung richtet sich auf einen Gleitschirm, insbesondere auf einen Gleitschirm mit einer Mehrzahl von zwischen einem Ober- und einem Untersegel gebildeten Zellen und außenrandseitigen Stabilisatoren und mit einer Vielzahl von Fang- und Steuerleinen. Derartige Gleitschirme sind in unterschiedlichen Gestaltungen bekannt. Hier seien die AT-401 036-B oder die US-4 657 207, US-4 623 108 oder US-5 044 576 genannt. Wesentlich ist bei als Sportgeräten eingesetzten Schirmen, bei denen der Pilot unterhalb des Schirmes hängend versucht, die thermischen Gegebenheiten möglichst optimal auszunutzen, um eine möglichst lange Verweilzeit in der Luft zu erreichen, daß die Flugstabilität gewährleistet ist ebenso wie eine optimale Gleitleistung bei möglichst großer Wendigkeit im Fliegen von Kurven mit möglichst geringem Kurvensinken.

Die Gleitschirme werden dabei mit den Steuerleinen gehandhabt, die im wesentlichen über Verzweigungen, sogenannten Spinnen, mit der Hinterkante des Gleitsegels links und rechts vom Piloten verbunden sind, der bestimmte Bereiche der Hinterkante mehr oder weniger stark herabziehen kann, um dadurch den Profilauftrieb bzw. Profilwiderstand in diesen Bereichen zu erhöhen, womit sich die Schirme steuern lassen. Werden die Hinterkanten entsprechend stark herabgezogen, ist damit eine Verschlechterung des Flügelwirkungsgrades verbunden, was bei Kurvenfliegen den Nachteil mit sich bringt, daß der Schirm im Kurveninnenbereich entsprechend starken Bremswirkungen unterworfen wird, was zwangsläufig zu verstärktem Sinken führt.

Moderne Gleitsegel sind in Querrichtung gewölbt, wobei die Flügelenden vertikal stehen, Steuerleinen sind dabei in der Regel überwiegend mit dem horizontalen Bereich der Flügelhinterkanten, wie oben schon erwähnt, verbunden. Das zum Einleiten einer Kurve nötige Giermoment wird durch den kurveninnenseitig erhöhten Profilwiderstand erzeugt, der aufgrund seines vergleichsweise kurzen Hebelarmes relativ groß sein muß. Die Kurvenschräglage entsteht durch einseitiges Zurückbleiben des Gleitsegels relativ zum Piloten und kann durch Gewichtsverlagerung unterstützt werden. Da sich kurveninnenseitig neben dem Profilwiderstand auch der Profilauftrieb erhöht, entsteht jedoch gleichzeitig ein Rollmoment in die falsche Richtung.

Hier setzt die Erfindung an, deren Aufgabe es ist, bei Erhöhung der Wendigkeit eines derartigen Gleitschirmes bzw. -segels das Kurvensinken zu minimieren.

Mit einem Gleitschirm der eingangs bezeichneten Art wird diese Aufgabe gemäß der Erfindung dadurch gelöst, daß die Hinterkante der vertikalen Flügelenden (Stabilos) mit einer Zusatzsteuerleine zur Ausübung einer Bewegung nach innen ausgerüstet sind.

Mit der Erfindung ist es möglich, daß der Pilot die Hinterkanten der kurveninnenseitigen Stabilisatoren nach innen zieht, wodurch beispielsweise das für einen bestimmten Kurvenradius notwendige Giermoment durch den längeren wirksamen Hebelarm bezüglich der Gleitschirmhochachse mit weniger Bremseinsatz erzielbar ist, was zu geringerem Kurvensinken führt.

Ein weiterer Vorteil besteht darin, daß sich der Gleitschirm beim Einleiten einer Kurve spontaner in Schräglage begibt, da durch die Auftriebskraft am Stabilisator, die horizontal in Richtung der Kurveninnenseite wirkt, ein Rollmoment in die gewünschte Richtung entsteht, was zur Erhöhung der Wendigkeit derartiger Schirme führt.

Des weiteren ergeben sich Vorteile für das Starthandling, da dieses Rollmoment ein aktives Aufrichten des Gleitschirmes ermöglicht, falls sich dieser beim Startlauf schräg über den Piloten gestellt hat, so daß Korrekturen durch seitliches Unterlaufen des Schirmes in geringerem Maße notwendig werden.

Ein Nebeneffekt besteht im übrigen auch darin, daß bei Gleitschirmen, die zum Einklappen der Kurvenaußenseite neigen, sich dadurch ein verbessertes Flugverhalten bei harten Kurvenwechseln ergibt.

In Ausgestaltung ist vorgesehen, daß an jedem der Stabilisatoren an der Hinterkante Befestigungsdreiecke oder Spinnen zur Befestigung der jeweiligen Zusatzsteuerleinen vorgesehen sind.

Es können unterschiedliche Führungen dieser zusätzlichen Steuerleinen vorgesehen sein, so etwa können Umlenkeinrichtungen, wie Ösen oder Schlaufen, für die Zusatzsteuerleine an der Hinterkante der Stabilisatoren vorgesehen sein, die Zusatzsteuerleine kann mit der Hauptsteuerleine wenigstens im Bereich der Steuerschlaufe, d.h. dem Zugriffsbereich des Piloten, zu einer Steuerleine verbunden sein u. dgl. mehr.

Vorteilhaft kann es sein, wenn die Zusatzsteuerleine als zusätzliche Verzweigung unmittelbar an der Hauptsteuerleine angeschlagen ist, wie dies die Erfindung in weiterer Ausgestaltung ebenfalls vorsieht.

Eine andere Gestaltungsmöglichkeit besteht darin, daß die Hauptsteuerleine und die Zusatzsteuerleine einstückig ausgebildet sind mit Umlenkungen im Bereich der daran befestigten gemeinsamen Steuerschlaufe, wobei auch Rollen od. dgl. vorgesehen sein können, um die ineinander übergehende Haupt- und Zusatzsteuerleine optimal zu führen und damit optimal betätigen zu können.

Um Fehlbetätigungen zu vermeiden, kann eine Einrichtung zur Begrenzung der Auszugsweite der Zusatzsteuerleine nach Erreichen einer vorbestimmten Umlenkung der Stabilisatoren vorgesehen sein.

Weitere Merkmale, Vorteile und Einzelheiten der Erfindung ergeben sich aufgrund der nachfolgenden Beschreibung sowie anhand der Zeichnung. Diese zeigt in
- Fig. 1: in vereinfachter Darstellung die Seitenansicht eines Gleitschirmes,
- Fig. 1a: einen Schnitt gemäß Linie A-A in Fig. 1,
- Fig. 1b: eine Einzelheit Z in Fig. 1 sowie in den
- Fig. 2 bis 6: unterschiedliche Anbringungen und Führungen einer Zusatzsteuerleine auf einer Schirmseite.

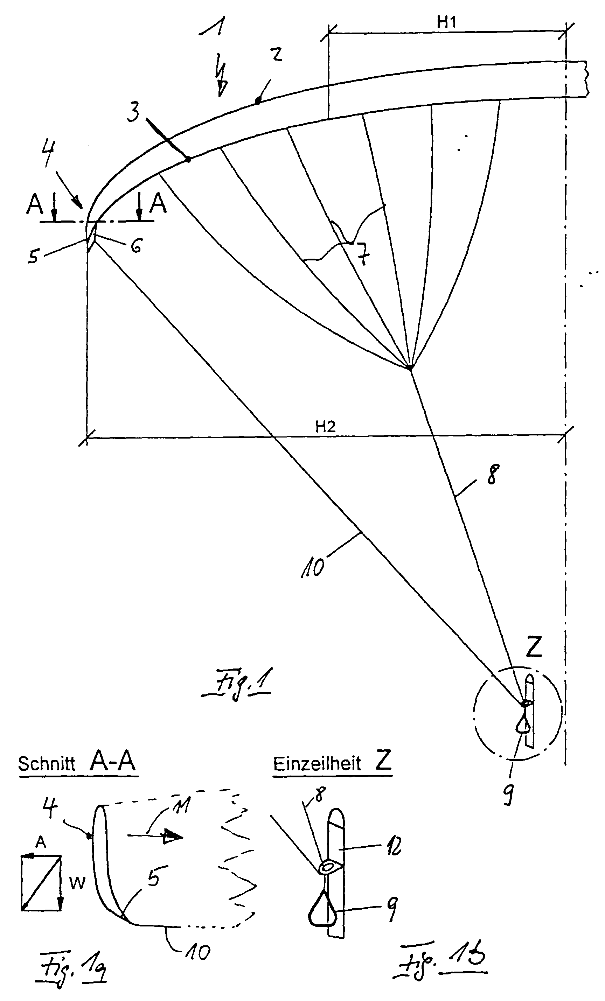

Der in Fig. 1 allgemein mit 1 bezeichnete Gleitschirm kann beispielsweise aus einer Mehrzahl von Kammern, die nicht näher dargestellt sind, zwischen einem Obersegel 2 und einem Untersegel 3 gebildet sein, wobei, wie dargestellt, die Enden 4 des Flügels als Stabilisatoren im wesentlichen vertikal ausgebildet sind und deren Hinterkanten 5 mit Befestigungsdreiecken 6, sogenannten Flares, ausgerüstet sind.

Wie sich insbesondere aus Fig. 1 ergibt, sind in der Regel an der Hinterseite des Untersegels zu einer Spinne 7 zusammengefaßte Steuerleinen befestigt, die über die Spinne 7 zu der Hauptsteuerleine 8 zusammengefaßt sind, die mit einer Steuerschlaufe 9 bestückt ist, wie sich dies beispielsweise aus Fig. 1b ergibt.

Erfindungsgemäß ist im dargestellten Beispiel das Befestigungsdreieck 6, d.h. das Flare, mit einer Zusatzsteuerleine 10 ausgerüstet, die zum Tragegurt 12 geführt ist, z.B. auf einem direkten Weg, wie in Fig. 1 dargestellt, und dort in der Nähe der Steuerschlaufe 9 befestigt ist.

Die Wirkungsweise dieser Zusatzsteuerleine 10 kann am Beispiel der Fig. 1 und 1a dargestellt werden. Wird über die Zusatzsteuerleine 10 die vertikale Hinterkante 5 zum Piloten, d.h. nach innen gemäß Pfeil 11 in Fig. 1a gezogen, wirkt die Widerstandskraft W, die das für einen bestimmten Kurvenradius notwendige Giermoment erzeugt, an einem vergleichsweise großen, nämlich dem größtmöglich erreichbaren Hebelarm H2, der in Fig. 1 eingezeichnet ist. Werden, wie beim Stand der Technik bekannt, nur die Hinterkanten des Untersegels 3 über die Spinne 7 nach unten gezogen, ergibt sich die Wirkung nur an einem mittleren Hebelarm H1, der, wie dargestellt, etwa die Hälfte von H2 beträgt.

Zusätzlich wird erreicht, daß durch die Auftriebskraft A (s. Diagramm Fig. 1a) am Stabilisator 4, die horizontal in Richtung der Kurveninnenseite wirkt, ein Rollmoment in die vom Pilot gewünschte Richtung entsteht, was zu einer erhöhten Wendigkeit führt.

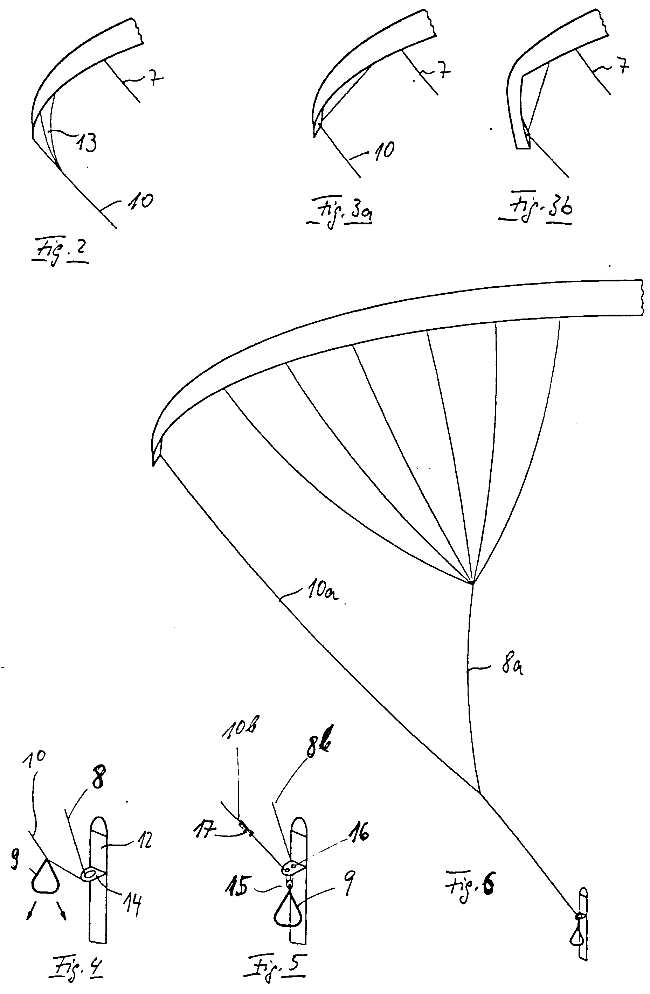

In den Fig. 2 bis 6 sind alternative Führungen der Zusatzsteuerleine 10 und/oder unterschiedliche Befestigungen der Steuerschlaufe dargestellt in Verbindung mit einem nur andeutungsweise wiedergegebenen Tragegurt 12, durch den der Pilot getragen wird.

Neben der in Fig. 1 dargestellten unmittelbaren Führung der Zusatzsteuerleine 10 zum Tragegurt 12 kann diese Zusatzsteuerleine 10a auch mit der Hauptsteuerleine 8a, wie in Fig. 6 dargestellt, zusammengefaßt werden und gemeinsam als eine Steuerleine zur Steuerschlaufe geführt sein. Über einen entsprechend stärkeren Durchhang der Hauptsteuerleine 8a kann erreicht werden, daß diese erst nach der Zusatzsteuerleine 10a auf Zug kommt.

Eine andere Möglichkeit der Anbringung der Zusatzsteuerleine 10 ist in Fig. 2 dargestellt. Hier kann an der Steuerleine 10 selbst eine Spinne 13 vorgesehen sein, wobei über einen unterschiedlichen Durchhang der einzelnen Spinnenleinen erreichbar ist, daß bei Zug die jeweiligen Bereiche der Hinterkanten nacheinander betätigbar sind, je nach Form der Gleitsegelenden und dem gewünschten Kurvenflugverhalten.

In den Fig. 3a und 3b ist die Möglichkeit dargestellt, die Zusatzsteuerleine 10 durch Ösen oder Schlaufen an den Hinterkanten der Stabilos zu führen, um sie z.B. weiter oben am Gleitsegel befestigen zu können, wodurch zunächst der vertikale Bereich der Hinterkante nach innen und erst dann der horizontale Bereich des Schirmes nach unten gezogen wird, wie dies Fig. 3a bzw. 3b zeigen.

In Fig. 4 ist dargestellt, daß die Hauptsteuerleine 8 z.B. durch eine Schlaufe 14 oder einen Ring am Tragegurt 12 geführt ist und dann gemeinsam mit der Zusatzsteuerleine 10 an der Steuerschlaufe 9 befestigt ist. Damit hat der Pilot die Möglichkeit, die Hauptsteuerleine 8 oder die Zusatzsteuerleine 10 je nach seinen Wünschen individuell nacheinander oder gleichzeitig zu betätigen.

Schließlich ist in Fig. 5 die Möglichkeit dargestellt, eine Hauptsteuerleine 8b mit einer Zusatzsteuerleine 10b als Endlosleine zusammenzufassen, die über eine Rolle 15 an der Steuerschlaufe 9 geführt ist bei gleichzeitiger Führung durch zwei individuelle Öffnungen 16 in einer Lasche oder einem ähnlichen Element am Tragegurt. Da im Vergleich zu der Hauptsteuerleine die Zusatzsteuerleine bei gleichem Zugweg weniger Widerstandsfläche in den Fahrtwind stellt, benötigt sie weniger Zugkraft und wird deshalb bei dieser Konstruktion schneller heruntergezogen.

Es kann zweckmäßig sein, an der Zusatzsteuerleine einen Anschlag anzubringen, der in Fig. 5 mit 17 bezeichnet ist, um nach einem bestimmten Auszugsweg den weiteren Auszug der Zusatzsteuerleine zu verhindern, so daß nach Erreichen dieses Punktes über die Rolle 15 nur noch die Hauptsteuerleine aktivierbar ist.

Natürlich sind die beschriebenen Ausführungsbeispiele der Erfindung noch in vielfacher Hinsicht abzuändern, ohne den Grundgedanken zu verlassen. So ist die Erfindung insbesondere nicht auf eine besondere Art des Gleitschirm-Sportgerätes beschränkt, hier können alle gängigen Bauweisen eingesetzt werden.

## Patentansprüche

1. Gleitschirm, insbesondere Gleitschirm mit einer Mehrzahl von zwischen einem Ober- und Untersegel gebildeten Zellen, mit außenrandseitigen Stabilisatoren und mit einer Vielzahl von Fang- und Steuerleinen,
dadurch gekennzeichnet,
daß die Hinterkanten (5) der vertikalen Flügelenden (Stabilos) (4) mit einer Zusatzsteuerleine (10) zur Ausübung einer Bewegung nach innen ausgerüstet sind.

2. Gleitschirm nach Anspruch 1,
dadurch gekennzeichnet,
daß an jedem der Stabilisatoren (4) an den Hinterkanten Befestigungsdreiecke (6) oder Spinnen (13) zur Befestigung der jeweiligen Zusatzsteuerleine (10) vorgesehen sind.

3. Gleitschirm nach Anspruch 1 oder 2,
dadurch gekennzeichnet,
daß an den Hinterkanten (5) der Stabilisatoren (4) Umlenkeinrichtungen, wie Ösen oder Schlaufen, für die Zusatzsteuerleine (10) zu deren Befestigung an einer weiter innen liegenden Position am Gleitschirm (1) vorgesehen sind.

4. Gleitschirm nach einem der vorangehenden Ansprüche,
dadurch gekennzeichnet,
daß die Zusatzsteuerleine (10) im Bereich der Steuerschlaufe (9) mit dem Tragegurt (12) verbunden ist.

5. Gleitschirm nach einem der vorangehenden Ansprüche,
dadurch gekennzeichnet,
daß die Zusatzsteuerleine (10a) als zusätzliche Verzweigung unmittelbar an der Hauptsteuerleine (8a) angeschlagen ist.

6. Gleitschirm nach einem der vorangehenden Ansprüche,
dadurch gekennzeichnet,
daß die Hauptsteuerleine (8) und die Zusatzsteuerleine (10) einstückig ausgebildet sind mit Umlenkung im Bereich der daran befestigten gemeinsamen Steuerschlaufe (9).

7. Gleitschirm nach einem der vorangehenden Ansprüche,
dadurch gekennzeichnet,
daß die Steuerschlaufe (9) über Rollen (15) od. dgl. mit der ineinander übergehenden Haupt- und Zusatzsteuerleine (8b,10b) verbunden ist.

8. Gleitschirm nach einem der vorangehenden Ansprüche,
dadurch gekennzeichnet,
daß eine Einrichtung (17) zur Begrenzung der Auszugsweite der Zusatzsteuerleine (10b) nach Erreichen einer vorhestimmten Umlenkung der Stabilisatoren vorgesehen ist.
